# EUROPÄISCHE PATENTSCHRIFT

(11) **EP 1 469 963 B1**
(45) Veröffentlichungstag und Bekanntmachung des Hinweises auf die Patenterteilung: **20.07.2005**
(21) Anmeldenummer: 03734681.4
(22) Anmeldetag: 21.01.2003
(51) Int. Cl.: B22F 3/12, C22C 1/04, C22C 21/00, B22F 1/00

(54) **VERFAHREN ZUR HERSTELLUNG VON GESINTERTEN BAUTEILEN AUS EINEM SINTERFÄHIGEN MATERIAL**
METHOD FOR PRODUCING SINTERED COMPONENTS FROM A SINTERABLE MATERIAL
PROCEDE POUR PRODUIRE DES COMPOSANTS FRITTES A PARTIR D'UN MATERIAU FRITTABLE

(30) Priorität: 29.01.2002 DE 10203283
(43) Veröffentlichungstag der Anmeldung: 27.10.2004
(73) Patentinhaber: GKN Sinter Metals GmbH, 42477 Radevormwald (DE)
(72) Erfinder: LINDENAU, René, 42477 Radevormwald (DE); DOLLMEIER, Klaus, 58332 Schwelm (DE); ARNHOLD, Volker, 42369 Wuppertal (DE)
(74) Vertreter: Maxton Langmaack & Partner
(86) Internationale Anmeldenummer: PCT/EP2003/000529
(87) Internationale Veröffentlichungsnummer: WO 2003/064083

(56) Entgegenhaltungen:
- EP-A- 0 436 952
- EP-A- 0 995 525
- US-A- 2 287 251
- US-A- 5 232 659
- DATABASE WPI Section Ch, Week 197636 Derwent Publications Ltd., London, GB; Class M26, AN 1976-68338X XP002239251 & SU 491 717 A (FRIDLYANDER I N), 10. Februar 1976 (1976-02-10)
- PATENT ABSTRACTS OF JAPAN vol. 012, no. 316 (C-524), 26. August 1988 (1988-08-26) & JP 63 086831 A (ALUM FUNMATSU YAKIN GIJUTSU KENKYU KUMIAI), 18. April 1988 (1988-04-18)

## Beschreibung

Die vorliegende Erfindung betrifft ein Verfahren zur Herstellung von gesinterten Bauteilen aus einem sinterfähigen Material.

Ein üblicher Sinterprozeß umfaßt die Schritte des Einfüllens eines sinterfähigen Materials in eine Preßform, Pressen desselben zu einem sogenannten Grünling, Sintern dieses Grünlings bei Sintertemperaturen, gefolgt gegebenenfalls von einem Homogenisierungsglühen, sowie einem nachträglichen Kalibrieren und gegebenenfalls einer Aushärtung. Insbesondere der Schritt des Kalibrierens ist zeit- und kostenaufwendig, da das dem eigentlichen Sinterschritt entnommene Bauteil oft keine ausreichende Maßhaltigkeit aufweist. Dementsprechend ist eine Kalibrierung unverzichtbar. Zudem wird üblicherweise während der Kalibrierung das bereits gesinterte Bauteil mit Druck beaufschlagt und dadurch weiter verdichtet, um eine höhere Enddichte und auch Härte zu erlangen. Dadurch stellt der Schritt der Kalibrierung aufgrund seiner Vielschichtigkeit einen Verfahrensschritt im Sinterprozeß dar, welcher nicht nur maßgeblich ist für die Qualität der letztendlich auszuliefernden gesinterten Bauteile, sondern auch aufwendig und daher aus wirtschaftlicher Sicht betrachtet negativ ist.

Es besteht daher ein Bedarf an einem Verfahren, durch welches der Kalibrierungsschritt entweder wegfällt oder aber dermaßen vereinfacht wird, daß das Verfahren wirtschaftlicher wird. Gleichzeitig muß jedoch sichergestellt werden, daß die auszuliefernden gesinterten Bauteile hohe Festigkeiten und/oder hohe Dichten und Härten aufweisen, die ausreichend für die entsprechenden Anwendungen sind.

Aufgabe der vorliegenden Erfindung ist es daher, ein Verfahren zur Herstellung von gesinterten Bauteilen zur Verfügung zu stellen, welches die vorgenannten Nachteile nicht aufweist.

Die vorliegende Erfindung betrifft ein Verfahren zur Herstellung von gesinterten Bauteilen, auch Verbundteilen, aus einem sinterfähigen Material, wobei
- in einem ersten Schritt das sinterfähige Material, umfassend 0,6 bis. 1,8 Gew%, bezogen auf die Gesamtmenge der Pulvermischung eines Bindemittels und/oder Gleitmittels, in eine erste Preßform eingegeben wird;
- in einem zweiten Schritt das sinterfähige Material zu einem Grünling gepreßt wird;
- in einem dritten Schritt der Grünling in einer zweiten Preßform durch uniaxiales Pressen zur Gänze nachverdichtet wird; und
- in einem vierten Schritt der nachverdichtete Grünling gesintert wird, wobei mit der im dritten Schritt vorgenommenen Nachverdichtung eine Dichte erzielt wird, welche etwa 2 bis etwa 40%, bevorzugt 5 bis 30%, weiter bevorzugt 15 bis 25%, über derjenigen vor der Nachverdichtung liegt.

Vorzugsweise werden im zweiten Schritt des erfindungsgemäßen Verfahrens Grünlinge mit einer Ausgangsdichte in einem Bereich von 2,1 bis 2,5 g/cm³, bevorzugt 2,2 bis 2,4 g/cm³, weiter bevorzugt 2,25 bis 2,38 g/cm³, gemessen gemäß DIN ISO 2738, gepreßt.

Ein Nachverdichten von durch Metallpulverspritzgießen von Spritzgußmassen mit dort relativ hohem Bindemittelanteil hergestellten Grünlingen ist beschrieben in EP-A- 995 525. Bei durch Pressen aus bindemittelärmeren Metallpulvermassen in Preßformen ohne besonderen Entbinderungsschritt hergestellten Grünlingen ist das Nachverdichten nicht bekannt.

Das erfindungsgemäße Verfahren weist den großen Vorteil auf, daß durch die bereits im dritten Schritt erzielte hohe Dichte vor dem eigentlichen Sintern Bauteile herstellbar sind, welche einerseits hervorragende Festigkeitswerte, andererseits auch ausgesprochen hohe Dichten und Härten aufweisen. Insbesondere können durch die gemäß dem erfindungsgemäßen Verfahren erfolgte Nachverdichtung die sich an den Sinterschritt anschließenden üblichen Nachbearbeitungsschritte wie das Kalibrieren und/oder die Aushärtung durch Auslagerung in der Wärme erheblich verkürzt werden, oder aber gegebenenfalls die übliche Nachbrennung oder aber die Kalibrierung weggelassen werden. Durch diese Verkürzung des Gesamtprozesses wird eine Produktivitätserhöhung und damit ein wirtschaftlicher Vorteil erreicht.

Durch das Nachverdichten im dritten Schritt des erfindungsgemäßen Verfahrens wird vorteilhafterweise erreicht, daß die auf der Oberfläche des eingesetzten Materials vorhandenen Oxidschichten mechanisch aufgebrochen werden, wodurch eine bessere Kaltverschweißung beim Preßvorgang zwischen den einzelnen Materialpartikeln erreicht wird. Des weiteren wird hierdurch auch die Diffusion während des eigentlichen Sinterprozesses der einzelnen Materialpartikel verbessert. Hierdurch können Bauteile mit erhöhten Festigkeitswerten und insbesondere höherer Härte erhalten werden.

Der im zweiten und dritten Schritt des erfindungsgemäßen Verfahrens erfolgte Preßvorgang kann sowohl bei erhöhter Temperatur, insbesondere unter Zugabe der oben genannten Mittel, insbesondere Polyethylenglykole (Warmpressen), jedoch auch bei Raumtemperatur (Kaltpressen), als auch über Vibrationsverdichten erfolgen. Unter Vibrationsverdichten wird hier ein Verfahren verstanden, bei welchem während des Preßvorgangs zumindest zeitweise eine Schwingung den Preßvorgang überlagert, wobei die Schwingung beispielsweise über wenigstens einen Preßstempel eingeleitet werden kann. Auch eine Kombination der vorgenannten Preßverfahren ist möglich. Sinterfähige Materialien sind insbesondere Pulver bzw. Pulvermischungen, insbesondere Metallpulver und/oder Keramikpulver, beispielsweise aus Stählen wie Chrom-Nickel-Stahl, Bronzen, Nickelbasislegierungen wie Hastalloy, Inconel, Metall-Oxiden,-Nitriden, -Siliziden oder dergleichen, und insbesondere aluminiumhaltige Pulver bzw. Pulvermischungen, wobei die Pulvermischungen auch hochschmelzende Bestandteile enthalten können wie beispielsweise Platin oder dergleichen. Das verwendete Pulver und seine Teilchengröße ist vom jeweiligen Einsatzzweck abhängig. Bevorzugte eisenhaltige Pulver sind die Legierungen 316 L, 304 L, Inconel 600, Inconel 625, Monel und Hastalloy B, X und C. Weiterhin kann das sinterfähige Material ganz oder teilweise aus Rurzfasern bzw. Fasern sein, vorzugsweise Fasern mit Durchmessern zwischen etwa 0,1 und 250 µm und einer Länge von wenigen µm bis zu Millimetergröße, bis hin zu 50 mm wie z.B. Metallfaservlies.

Unter gesinterten Bauteilen im Sinne der vorliegenden Erfindung werden Bauteile verstanden, welche vollständig aus einem sinterfähigen Material hergestellt wurden, andererseits werden hierunter auch Verbundteile verstanden, wobei der Grundkörper eines derartigen Verbundteils beispielsweise aus einer aluminiumhaltigen Pulvermischung hergestellt sein kann und der mit dem Grundkörper weiter verbundene Körper aus einem weiteren Material, beispielsweise Eisen oder Gußstahl, gesintert oder massiv, oder aus massivem Aluguß. Umgekehrt kann das Verbundteil auch beispielsweise lediglich auf den Stirnseiten oder seiner Oberfläche eine gesinterte Schicht aus einer aluminiumhaltigen Pulvermischung aufweisen, wohingegen der Grundkörper aus beispielsweise Stahl oder Gußeisen, gesintert oder massiv, ist. Die gesinterten Bauteile können dabei kalibriert und/oder ausgehärtet in der Wärme sein.

Ist es gewünscht, Verbundteile herzustellen, welche beispielsweise auf der Stirnseite eines aus Stahl oder Gußeisen bestehenden Körpers eine gesinterte Schicht aus dem sinterfähigen Material aufweisen sollen, so wird im ersten Schritt des erfindungsgemäßen Verfahrens das sinterfähige Material beispielsweise über übliche Methoden auf den Grundkörper aufgebracht, es kann jedoch auch vorgesehen sein, beispielsweise das Material in Pulverform aufzusprühen (Wet Powder Spraying: WPS). Hierzu ist es notwendig, eine Suspension des sinterfähigen Materials herzustellen. Die hierfür notwendige Suspension umfaßt vorzugsweise Lösemittel, Bindemittel, Stabilisatoren und/oder Dispergiermittel. Besonders bevorzugte Lösemittel sind ausgewählt aus einer Gruppe umfassend Wasser, Methanol, Ethanol, Isopropanol, Terpene, C₂-C₅-Alkene, Toluol, Trichlorethylen, Diethylether und/oder C₁-C₆-Aldehyde und/oder Ketone. Bevorzugt sind hierbei Lösemittel, die bei Temperaturen unter 100 °C verdampfbar sind. Die Menge der verwendeten Lösemittel liegt in einem Bereich von etwa 40 bis 70 Gew%, bezogen auf die eingesetzte sinterfähige Pulvermischung, bevorzugt in einem Bereich von etwa 50 bis 65 Gew%.

Die im dritten Schritt erfolgende Nachverdichtung (welche auch Zwischenverdichtung genannt werden kann) kann durch für die Pressung eines Grünlings übliche und bekannte Verfahren vorgenommen werden. So kann beispielsweise der im zweiten Schritt gepreßte Grünling erneut in eine übliche Matrizenform eingebracht und in dieser zumindest teilweise durch entsprechende Preßstempel nachverdichtet werden. Vorzugsweise können die Nachverdichtwerkzeuge ganz oder teilweise konisch ausgelegt werden, so daß an bestimmten vorherbestimmten Stellen des Grünlings besonders hohe Verdichtungen erreicht werden können.

In einer bevorzugten Ausführungsform des erfindungsgemäßen Verfahrens wird vor dem dritten Schritt in einem weiteren Schritt der Grünling entwachst. Das Entwachsen erfolgt vorzugsweise unter Stickstoff, Wasserstoff, Luft und/oder Mischungen der genannten Gase, insbesondere auch mit gezielter Luftzuführung. Weiterhin kann die Entwachsung mit Endogas und/oder Exogas vorgenommen werden, jedoch auch im Vakuum. Die Entwachsung kann bevorzugt durch überlagerte Mikrowellen und/oder Ultraschall, oder aber nur über Mikrowellen zur Temperaturführung erfolgen. Schließlich kann das Entwachsen auch über Lösemittel wie Alkohol o. ä. oder überkritischem Kohlendioxid mit oder ohne Einwirkung von Temperatur, Mikrowellen oder Ultraschall oder Kombination der vorgenannten Verfahren vorgenommen werden.

In einer weiteren Ausführungsform des erfindungsgemäßen Verfahrens wird vorteilhafterweise eine Form, in welche der gegebenenfalls entwachste Grünling eingebracht wird, vor Einbringung des Grünlings mit einem Gleitmittel besprüht. Es kann auch der entwachste Grünling in Gleitmittel getränkt werden. Weiterhin ist besonders vorteilhaft, daß der Sinterprozeß im vierten Schritt unter Stickstoff mit einem Taupunkt kleiner -40 °C, bevorzugt kleiner -50 °C, durchgeführt wird. Hierbei erfolgt das Sintern vorzugsweise unter reinem Stickstoff. Weiterhin kann das Sintern bei entsprechender Dichte und/oder Zusammensetzung des Grünlings auch unter Luft, Wasserstoff, Mischungen aus Stickstoff und Wasserstoff mit oder ohne gezielte Luftzuführung, Endogas, Exogas oder im Vakuum durchgeführt werden, wobei das Sintern durch überlagerte Mikrowellen oder aber über Mikrowellen zur Temperaturführung erfolgen kann.

An den Sinterschritt kann vorzugsweise unmittelbar eine gegebenenfalls notwendige Wärmebehandlung, insbesondere ein Homogenisierungsglühen, angeschlossen werden. Dabei kann die Wärmebehandlung in Abhängigkeit der chemischen Zusammensetzung des erhaltenen Bauteils durchgeführt werden. Alternativ oder zusätzlich zur Wärmebehandlung kann das gesinterte Bauteil auch ausgehend von der Sinter- bzw. Homogenisierungsglühtemperatur vorzugsweise in Wasser oder aber über eine Gasschroffkühlung abgeschreckt werden.

Vor oder nach dem Sintern ist eine zusätzliche Oberflächenverdichtung, allgemeiner: ein Einbringen von Druckeigenspannungen in Oberflächenbereiche, durch Sand- oder Kugelstrahlen, Rollieren o. ä. möglich. Ebenso kann vor oder nach dem Homogenisierungsglühen eine Kalibrierung vorgenommen werden. Hierbei erfolgt die Kalibrierung bei Raumtemperatur oder erhöhter Temperatur bis hin zur Schmiedetemperatur, auch unter Anwendung von Drücken bis 9 t/cm². Gegebenenfalls kann das Kalibrieren sogar oberhalb der Soliduslinie vorgenommen werden, wobei dann das Bauteil auch direkt der Sinterhitze entnommen werden kann.

Die zur Kalibrierung verwendeten Kalibrier- und/oder Schmiedewerkzeuge können ganz oder teilweise konisch ausgebildet sein, wodurch an bestimmten Bereichen der Bauteile besonders hohe Verdichtungen erreicht werden können. Die Temperatur der Kalibrier- und/oder Schmiedewerkzeuge kann hierbei in Abhängigkeit des zu bearbeitenden Bauteils differieren und gegebenenfalls im isothermen Bereich gehalten werden. Eine Oberflächenverdichtung bzw. Einbringung von Druckeigenspannungen in die Oberfläche ist auch vor oder nach einer Wärmebehandlung bzw. dem Kalibrieren möglich.

Schließlich können abschließend noch Beschichtungen auf das gesinterte Bauteil aufgebracht werden. Bevorzugt sind hierbei Verfahren, mit welchen die Bauteile hartcoatiert und/oder eloxiert werden, wie beispielsweise thermische Sprühverfahren wie Plasmaspritzen, Flammspritzen oder aber physikalische und/oder chemische Verfahren wie PVD, CVD o. ä. Jedoch können Beschichtungen auch auf rein chemischem Wege wie beispielsweise durch Gleitlacke, welche Teflon enthalten können, oder Nanocomposite-Materialien aufgebracht werden. Durch eine Beschichtung kann die Oberfläche der Bauteile hinsichtlich der Härte, Rauhigkeit und des Reibkoeffizienten genau auf den Einsatzzweck abgestimmt modifiziert werden.

Bevorzugt wird als sinterfähiges Material eisen- und/oder aluminiumhaltiges Pulver und/oder Pulvermischungen, weiter bevorzugt aluminiumhaltige Pulvermischungen, verwendet. Durch den Einsatz pulverförmiger Materialien können schon vor dem eigentlichen Sinterschritt hohe Dichten der noch unverdichteten Grünlinge erhalten werden.

Im erfindungsgemäßen Verfahren wird bevorzugt eingesetzt eine sinterfähige Pulvermischung umfassend 60 bis 98,5 Gew%, bezogen auf die Gesamtmenge der Pulvermischung, bevorzugt 85 bis 98,5 Gew%, eines Al-Basispulvers aus Metallen und/oder deren Legierungen, umfassend Al, 0,2 bis 30 Gew% Mg, 0,2 bis 40 Gew% Si, 0,2 bis 15 Gew% Cu, 0,2 bis 15 Gew% Zn, 0,2 bis 15 Gew% Ti, 0,2 bis 10 Gew% Sn, 0,2 bis 5 Gew% Mn, 0,2 bis 10 Gew% Ni und/oder weniger als 1 Gew% an As, Sb, Co, Be, Pb und/oder B, wobei die Gewichtsprozentanteile jeweils bezogen sind auf die Gesamtmenge an Al-Basispulver, und 0,8 bis 40 Gew%, bezogen auf die Gesamtmenge der Pulvermischung, bevorzugt 1,5 bis 20 Gew%, weiter bevorzugt 2 bis 4 Gew%, eines Metallpulvers, ausgewählt aus einer ersten Gruppe von Metallen und/oder deren Legierungen bestehend aus Mo, Wo, Cr, V, Zr und/oder Yt.

Durch die Zugabe der ersten Gruppe von Metallen und/oder deren Legierungen bestehend aus Mo, Wo, Cr, V, Zr und/oder Yt können mit dieser Pulvermischung pulvermetallurgisch Bauteile hergestellt werden, welche eine sehr hohe Härte aufweisen. Die Werte für die Härte für Bauteile, hergestellt mit einem Pulver, ausgewählt aus der ersten Gruppe von Metallen und/oder deren Legierungen, sind im Vergleich zu solchen ohne Zugabe dieser ersten Gruppe von Metallen und/oder deren Legierungen um 5 bis 35 %, bevorzugt 10 bis 25 %, erhöht. Durch den Zusatz der ersten Gruppe von Metallen und/oder deren Legierungen zu einem Al-Basispulver wird insbesondere die durch den Preßvorgang, insbesondere die Nachverdichtung, hervorgerufene Kaltverschweißung der Partikel untereinander verbessert. Hierdurch wird letztendlich auch die Diffusion der einzelnen Partikel während des einzelnen Sintervorgangs verbessert, wodurch Bauteile mit höheren Festigkeitswerten und höherer Härte erhalten werden.

Vorteilhafterweise umfaßt die sinterfähige Pulvermischung weiterhin eine zweite Gruppe von Metallen und/oder deren Legierungen, bestehend aus Cu, Sn, Zn, Li und/oder Mg. Die Zugabe der vorgenannten zweiten Gruppe von Metallen und/oder deren Legierungen bewirkt vermutlich, daß insbesondere noch während des Preßvorgangs, insbesondere.während der Nachverdichtung, mit dem Al-Basispulver eine Legierung und/oder intermetallische Phase gebildet wird. Hierdurch wird die Ausbildung von Oxidhäuten auf der Oberfläche des eingesetzten Al-Basispulvers behindert. Zusätzlich geht zumindest teilweise beim eigentlichen Sintervorgang die zweite Gruppe von Metallen und/oder deren Legierungen in einen zumindest teilweise flüssigen Zustand bei der Sintertemperatur über, wodurch die Anbindung insbesondere der ersten Gruppe von Metallen und/oder deren Legierungen an das Aluminium-Basispulver verbessert wird.

Bevorzugt liegt das Verhältnis der Menge der ersten Gruppe von Metallen und/oder deren Legierungen zu derjenigen der zweiten Gruppe in der Pulvermischung in einem Bereich von 1:8 bis 15:1 Gewichtsanteilen. Vorzugsweise liegt das Verhältnis in einem Bereich von 2:1 bis 6:1 Gewichtsanteilen. Bei derartigen Mischungsverhältnissen wird eine maximale Anbindung der Metalle und/oder Legierungen der ersten Gruppe an das Al-Basispulver erzielt. Hierdurch können mit der Pulvermischung Bauteile mit hoher Härte erhalten werden.

In einer weiteren vorteilhaften Ausgestaltung der Erfindung weist das Al-Basispulver neben Al 0,2 - 15 Gew% Mg, 0,2 bis 16 Gew% Si, 0,2 bis 10 Gew% Cu und/oder 0,2 bis 15 Gew% Zn, bezogen jeweils auf die Gesamtmenge des Al-Basispulvers, auf. Weiterhin weist bevorzugt die zweite Gruppe von Metallen und/oder deren Legierungen Cu, Zn und/oder Sn auf.

Vorzugsweise umfaßt die sinterfähige Pulvermischung Schmiermittel in einer Menge von 0,2 bis 5 Gew%, bezogen auf die Gesamtmenge der Pulvermischung. Als Schmiermittel können hierbei einerseits selbstschmierende Mittel vorgesehen sein wie beispielsweise MoS₂, WS₂, BN, MnS sowie Graphit und/oder andere Kohlenstoffmodifikationen wie Koks, polarisierter Graphit o.ä. Vorzugsweise werden 1 bis 3 Gew% Schmiermittel der sinterfähigen Pulvermischung zugegeben. Durch Einsatz der vorgenannten Schmiermittel können den aus der sinterfähigen Pulvermischung hergestellten Bauteilen selbstschmierende Eigenschaften vermittelt werden.

Die sinterfähige Pulvermischung kann weiterhin Bindemittel und/oder Gleitmittel umfassen. Diese sind bevorzugt ausgewählt aus einer Gruppe umfassend Polyvinylacetate, Wachse, insbesondere Amidwachse wie Ethylenbisstearoylamid, Schellack, Polyalkylenoxide und/oder Polyglykole. Polyalkylenoxide und/oder -glykole werden vorzugsweise als Polymere und/oder Copolymere mit mittleren Molekulargewichten in einem Bereich von 100 bis 500.000 g/mol, bevorzugt 1.000 bis 3.500 g/mol, weiter bevorzugt 3.000 bis 6.500 g/mol, verwendet. Die Mittel werden erfindungsgemäß in einem Bereich von 0,6 bis 1,8 Gew%, jeweils bezogen auf die Gesamtmenge der Pulvermischung, eingesetzt. Die Binde- und/oder Gleitmittel erleichtern auch das Entnehmen der aus der sinterfähigen Pulvermischung hergestellten Bauteile aus der Preßform.

Die Pulvermischung kann durch Mischen der einzelnen Bestandteile mit üblichen Apparaturen wie Taumelmischern sowohl in der Wärme (Warmmischen) als auch bei Raumtemperatur (Kaltmischen) hergestellt werden, wobei das Warmmischen bevorzugt ist.

Mit dem erfindungsgemäßen Verfahren werden gesinterte Bauteile hergestellt. Derartige gesinterte Bauteile weisen Festigkeitswerte und Härten auf, welche deutlich über solchen liegen, welche mit üblichen Verfahren hergestellt wurden. Bevorzugt weisen die gesinterten Bauteile eine Zugfestigkeit von mindestens 140 N/mm², gemessen gemäß DIN EN 10002-1, auf. Weiter bevorzugt beträgt die Zugfestigkeit mehr als 200 N/mm², noch weiter bevorzugt mehr als 300 N/mm². Vorteilhafterweise weisen die gesinterten Bauteile ein Elastizitätsmodul von mindestens 70 kN/mm², gemessen gemäß DIN EN 10002-1, auf, welches weiter bevorzugt größer 80 kN/mm² ist.

Bevorzugt weisen die gesinterten Bauteile eine Härte (HB 2,5/62,5 kg) von mindestens 100, gemessen gemäß DIN EN 24498-1, auf. Die Härte ist weiter bevorzugt größer als 110, noch weiter bevorzugt größer als 125.

Das gesinterte Bauteil kann insbesondere ein Zahnrad, Pumpenrad, insbesondere Ölpumpenrad, und/oder ein Pleuel und/oder ein Rotorsatz sein.

Diese und weitere Vorteile der vorliegenden Erfindung werden anhand der folgenden Beispiele erläutert.

### Vergleichsbeispiel 1:

Ein Al-Basispulver der Zusammensetzung Al4Cu1Mg0,5Si (entspricht der Bezeichnung AC2014 einer konventionellen Aluminium-Legierung, wobei das Basispulver 4 Gew% Cu, 1 Gew% Mg, 0,5 Gew% Si und 94,5 Gew% Al, bezogen auf die Gesamtmenge an Pulver, aufweist) der Firma ECKA Granulate GmbH & Co. KG, Velden, Deutschland, mit der Firmenbezeichnung ECKA Alumix 123 (92,5 Gew% Al), mit 1,5 Gew% eines Amidwachses als Bindemittel der Firma Hoechst mit der Bezeichnung Mikrowachs C wurde mit Molybdän- bzw. Wolfram-Pulver gemäß nachstehender Tabelle 1 gemischt. Die Mischung erfolgte hierbei in einem Taumelmischer durch Zugabe des Molybdän- bzw. Wolfram-Pulvers zu dem vorgelegten Al-Basispulver bei Raumtemperaturen über 5 min.

Das Al-Basispulver wies eine Korngrößenverteilung zwischen 45 und 200 µm auf, wobei der mittlere Partikeldurchmesser D₅₀ 75 bis 95 µm betrug. Das zugemischte Molybdän- bzw. Wolfram-Pulver wurde von der Firma H.C. Starck GmbH & Co. KG, Goslar, Deutschland, bezogen und wies einen mittleren Partikeldurchmesser D₅₀ von 25 µm mit einer Korngrößenverteilung in einem Bereich von etwa 5 bis 50 µm auf.

Anschließend wurde die Pulvermischung in eine Matrizenform gegeben und unter einem Druck von etwa 175 N/mm² (berechnet für eine Radstirnfläche von 20 cm²) über etwa 0,2 - 0,5 sec bei Raumtemperatur zu einem Grünling in Form eines Pumpenrades gepreßt. Die Dichte der Grünlinge betrug etwa 2,35 bis 2,38 g/cm³. Anschließend wurde der so hergestellte Grünling für etwa 30 min bei etwa 430 °C entwachst und dann bei einer Sintertemperatur von 610 °C unter reiner Stickstoffatmosphäre mit einem Taupunkt von -50 °C in einem Bandofen, welcher auf eine Geschwindigkeit von 3,4 m/h eingestellt war, über 30 min gesintert. Hierbei befanden sich die Grünlinge auf Al₂O₃-Platten. Anschließend wurde ein Homogenisierungsglühen durchgeführt über 1,5 h bei einer Temperatur von 515 °C. Anschließend wurde das gesinterte Pumpenrad schockgekühlt durch Abschrecken mit Wasser mit einer Temperatur von etwa 40°C über 10 sec.

Anschließend wurde eine Kalibrierung auf eine theoretische Dichte von 97 bis 98 Gew% unter Anwendung eines Druckes von etwa 810 N/mm² bei 200 °C vorgenommen.

Nach dem Kalibrieren wurde dann noch eine Aushärtung der gesinterten Pumpenräder in der Wärme bei 160 °C über 16 h durchgeführt. Anschließend wurde die Zugfestigkeit Rₘ, das Elastizitätsmodul sowie die Dehnung gemäß DIN EN 10002-1 an standardisierten Proben bestimmt. Weiterhin wurde die Härte gemäß DIN EN 24498-1 (Brinell-Härte) mit einer gehärteten Stahlkugel als Eindringkörper mit einem Durchmesser von 2,5 und mit einer Last von 62,5 kg ermittelt. Die ermittelten Werte sind in der nachfolgenden Tabelle 1 wiedergegeben.

**Tabelle 1**

| **Werkstoff** | **R**_{**m**}***** | **E-Modul** | **A**** | **Härte** |
|---|---|---|---|---|
| | N/mm² | kN/mm² | % | HB Ø 2,5/62,5 kg |
| Al4Cu1Mg0,5Si + 8 Gew% Mo | 205 | 87 | 0,01 | 122 |
| Al₄Cu₁Mg_{0,5}Si +14 Gew% Mo | 152 | 104 | 0,01 | 148 |
| Al₄Cu₁Mg_{0,5}Si + 8 Gew% W | 144 | 74 | 0,01 | 105 |
| Al₄Cu₁Mg_{0,5}Si +14 Gew% W | 135 | 74 | 0,01 | 102 |
| Rₘ* = Zugfestigkeit | | | | |
| A ** = Dehnung | | | | |

### Beispiel 2

Die vorstehend unter Ziffer 1 genannten Versuche wurden wiederholt, wobei jedoch zusätzlich ein Kupfer-Pulver, welches von der Firma Eckart Granules unter der Marke Ecka Kupfer CH-S vertrieben wird, beigemischt wurde. Die Beimischung erfolgte derart, daß zunächst das Molybdän- bzw. Wolfram-Pulver mit dem Kupfer-Pulver in einem Taumelmischer bei Raumtemperatur 5 min vermischt und dieses anschließend in einem Taumelmischer zu dem Al-Basispulver über 5 min zugemischt wurde. Das Kupfer-Pulver wies einen mittleren Partikeldurchmesser D₅₀ von 25 µm und eine Korngrößenverteilung in einem Bereich von etwa 5 bis etwa 50 µm auf. Das Kupfer-Pulver wurde elektrolytisch hergestellt, die einzelnen Partikel lagen in dendritischer Form vor.

Es wurden unterschiedliche Mischungen hergestellt, wobei diese wie unter Ziffer 1 beschrieben mit und ohne Nachverdichtung zu Pumpenrädern gesintert wurden. Für die Nachverdichtung wurde nach dem Pressen der Grünling unter einer Stickstoff-Atmosphäre für 30 min bei etwa 430°C entwachst und anschließend in einer zu der ersten Form identischen Matrizenform, welche mit dem Gleitmittel GLEITMO 300, Fuchs Lubritech GmbH, Weilerbach, Deutschland, besprüht wurde, bei einem Druck von 760 N/mm² für etwa 0,2 - 0,5 sec bei Raumtemperatur derart nachverdichtet, daß die Dichte des nachverdichteten Grünlings bei etwa 2,8 - 2,9 g/cm³ und damit um etwa 19 - 23 % über derjenigen des nicht nachverdichteten Pumpenrad-Grünlings und somit bei etwa 95 % der theoretischen Dichte lag.

Anschließend wurden die erzeugten Grünlinge wie vorstehend beschrieben gesintert, auf eine theoretische Dichte von 97 - 98% kalibriert bei einem Druck von 810 N/mm², jedoch bei Raumtemperatur, und ausgehärtet. Das Mischungsverhältnis zwischen Molybdän- bzw. Wolfram-Pulver zu dem Kupfer-Pulver betrug 5:1 Gewichtsanteile. Der Tabelle 2 können die Mischungsverhältnisse sowie die ermittelten physikalischen Werte entnommen werden.

**Tabelle 2**

| **Nr.** | **Werkstoff** | **Nach- verdichtung** | | **R**_{**m**}***** | **E-Modul** | **A**** | **Härte** |
|---|---|---|---|---|---|---|---|
| | | ja | nein | N/mm² | kN/mm² | % | HB ∅ 2,5/62,5kg |
| 2a | Al4Cu1Mg0,5Si + 8 Gew% (80 Gew% Mo + 20 Gew% Cu) | | x | 226 | 88 | 0,03 | 138 |
| 2a' | Al4Cu1Mg0,5Si + 8 Gew% (80 Gew% Mo + 20 Gew% Cu) | x | | 253 | 89 | 0,01 | 146 |
| 2b | Al4Cu1Mg0,5Si + 10 Gew% (80 Gew% Mo + 20 Gew% Cu) | | x | 206 | 93 | 0,01 | 142 |
| 2b' | Al4Cu1Mg0,5Si + 10 Gew% (80 Gew% Mo + 20 Gew% Cu) | x | | 227 | 96 | 0,03 | 150 |
| 2c | Al4Cu1Mg0,5Si + 12 Gew% (80 Gew% Mo + 20 Gew% Cu) | | x | 187 | 96 | 0,01 | 159 |
| 2c' | Al4Cu1Mg0,5Si + 12 Gew% (80 Gew% Mo + 20 Gew% cu) | x | | 193 | 100 | 0,01 | 164 |
| 2d | Al4Cu1Mg0,5Si + 14 Gew% (80 Gew% Mo + 20 Gew% Cu) | | x | 178 | 101 | 0,01 | 159 |
| 2d' | Al4Cu1Mg0,5Si + 14 Gew% (80 Gew% Mo + 20 Gew% Cu) | x | | 191 | 107 | 0,01 | 179 |
| 2e | Al4Cu1Mg0,5Si + 8 Gew% (80 Gew% W + 20 Gew% Cu) | | x | 155 | 75 | 0,03 | 110 |
| 2e' | Al4Cu1Mg0,5Si + 8 Gew% (80 Gew% W + 20 Gew% Cu) | x | | 237 | 79 | 0,04 | 122 |
| 2f | Al4Cu1Mg0,5Si + 10 Gew% (80 Gew% W + 20 Gew% Cu) | | x | 173 | 74 | 0,05 | 107 |
| 2f' | Al4Cu1Mg0,5Si + 10 Gew% (80 Gew% W + 20 Gew% Cu) | x | | 243 | 81 | 0,03 | 121 |
| 2g | Al4Cu1Mg0,5Si + 12 Gew% (80 Gew% W + 20 Gew% Cu) | | x | 147 | 73 | 0,05 | 107 |
| 2g' | Al4Cu1Mg0,5Si + 12 Gew% (80 Gew% W + 20 Gew% Cu) | x | | 233 | 86 | 0,04 | 121 |
| 2h | Al4Cu1Mg0,5Si + 14 Gew% (80 Gew% W + 20 Gew% Cu) | | x | 146 | 76 | 0,05 | 107 |
| 2h' | Al4Cu1Mg0,5Si + 14 Gew% (80 Gew% W + 20 Gew% Cu) | x | | 213 | 84 | 0,03 | 130 |
| Rₘ * = Zugfestigkeit | | | | | | | |
| A ** = Dehnung | | | | | | | |

Wie der Tabelle 2 entnommen werden kann, werden durch eine Nachverdichtung die physikalischen Eigenschaften positiv beeinflußt. Insbesondere kann eine weitere Steigerung der Härte der hergestellten Pumpenräder erzielt werden.

Mit der vorliegenden Erfindung ist es möglich, gesinterte Bauteile, insbesondere auf Basis eines Al-Pulvers, herzustellen, welche nicht nur ausgezeichnete Festigkeitswerte, sondern insbesondere eine hohe Härte aufweisen. Hierdurch können derartige Bauteile vorteilhafterweise an stark beanspruchten Stellen, insbesondere im Motor oder aber Getriebe, eingesetzt werden. Zudem können durch den möglichen Wegfall der Kalibrierung und der Aushärtung durch Auslagerung in der Wärme gesinterte Bauteile günstiger und schneller produziert werden.

## Patentansprüche

1. Verfahren zur Herstellung von gesinterten Bauteilen, auch Verbundteilen, aus einen sinterfähigen Material, wobei
- in einem ersten Schritt das sinterfähige Material, umfassend 0, 6 bis 1,8 Gew%, bezogen auf die Gesamtmenge der Pulvermischung eines Bindemittels und/oder Gleitmittels, in eine erste Preßform eingegeben wird;
- in einem zweiten Schritt das sinterfähige Material zu einem Grünling gepreßt wird;
- in einem dritten Schritt der Grünling in einer zweiten Preßform durch uniaxiales Pressen zur Gänze nachverdichtet wird; und
- in einem vierten Schritt der nachverdichtete Grünling gesintert wird, wobei die mit der im dritten Schritt vorgenommenen Nachverdichtung erzielte Dichte des Grünlings etwa 2 bis 40% über derjenigen vor der Nachverdichtung liegt.

2. Verfahren gemäß Anspruch 1, **dadurch gekennzeichnet, daß** vor dem dritten Schritt der Grünling entwachst wird.

3. Verfahren gemäß einem der Ansprüche 1 oder 2, **dadurch gekennzeichnet, daß** im dritten Schritt vor Einbringung des Grünlings in die zweite Preßform diese mit einem Gleitmittel besprüht wird.

4. Verfahren gemäß einem der vorhergehenden Ansprüche 1 bis 3, **dadurch gekennzeichnet, daß** der Sinterprozeß in einem vierten Schritt unter Stickstoff mit einem Taupunkt kleiner -40 °C durchgeführt wird.

5. Verfahren gemäß einem der vorhergehenden Ansprüche, **dadurch gekennzeichnet, daß** als sinterfähiges Material eisen- und/oder aluminiumhaltiges Pulver bzw. Pulvermischungen verwendet wird.

6. Verfahren gemäß einem der vorhergehenden Ansprüche, **dadurch gekennzeichnet, daß** eine sinterfähige Pulvermischung eingesetzt wird, umfassend 60 bis 98,5 Gew%, bezogen auf die Gesamtmenge der Pulvermischung, eines Al-Basispulvers aus Metallen und/oder deren Legierungen, umfassend Al und gegebenenfalls mindestens eines der folgenden Metalle: 0,2 bis 30 Gew% Mg, 0,2 bis 40 Gew% Si, 0,2 bis 15 Gew% Cu, 0,2 bis 15 Gew% Zn, 0,2 bis 15 Gew% Ti, 0,2 bis 10 Gew% Sn, 0,5 bis 5 Gew% Mn, 0,2 bis 10 Gew% Ni und/oder weniger als 1 Gew% an As, Sb, Co, Be, Pb und/oder B, wobei die Gewichtsprozentanteile jeweils bezogen sind auf die Gesamtmenge an Al-Basispulver, sowie 0,8 bis 40 Gew%, bezogen auf die Gesamtmenge der Pulvermischung, eines Metallpulvers ausgewählt aus einer ersten Gruppe von Metallen und/oder deren Legierungen, bestehend aus Mo, Wo, Cr, V, Zr und/oder Yt.

7. Verfahren gemäß Anspruch 6 , **dadurch gekennzeichnet, daß** die Pulvermischung weiterhin eine zweite Gruppe von Metallen und/oder deren Legierungen, bestehend aus Cu, Sn, Zn, Li und/oder Mg umfaßt.

8. Verfahren gemäß Anspruch 7, **dadurch gekennzeichnet, daß** das Verhältnis der Menge der ersten Gruppe von Metallen und/oder deren Legierungen zu derjenigen der zweiten Gruppe in der Pulvermischung in einem Bereich von 1:8 bis 15:1 Gewichtsanteilen liegt.

9. Verfahren gemäß Anspruch 5, **dadurch gekennzeichnet, daß** das Al-Basispulver neben Al 0,2 bis 15 Gew% Mg, 0,2 bis 16 Gew% Si, 0,2 bis 10 Gew% Cu und/oder 0,2 bis 15 Gew% Zn, bezogen jeweils auf die Gesamtmenge des Al-Basispulvers, aufweist.

10. Verfahren gemäß Anspruch 7, **dadurch gekennzeichnet, daß** die zweite Gruppe von Metallen und/oder deren Legierungen cu, Zn und/oder Sn aufweist.

11. Verfahren gemäß einem der vorhergehenden Ansprüche, **dadurch gekennzeichnet, daß** die Pulvermischung Schmiermittel in einer Menge von 0,2 bis 5 Gew%, bezogen auf die Gesamtmenge der Pulvermischung, umfaßt.

## Claims

1. Method for producing sintered components, also composite parts, from a sinterable material, wherein
- in a first step the sinterable material, comprising 0.6 to 1.8 wt.%, related to the total amount of the powder mixture, of a binder and/or slip agent is fed into a first die;
- in a second step the sinterable material is pressed into a green compact;
- in a third step the green compact is completely repressed in a second die by uniaxial pressing; and
- in a fourth step the repressed green compact is sintered, wherein the density of the green compact which is obtained with the repressing carried out in the third step is approximately 2 to 40% above that prior to repressing.

2. Method according to Claim 1, **characterised in that** the green compact is dewaxed prior to the third step.

3. Method according to either of Claims 1 and 2, **characterised in that** in the third step, prior to introducing the green compact into the second die, this is sprayed with a slip agent.

4. Method according to any one of the preceding Claims 1 to 3, **characterised in that** the sintering process in a fourth step is carried out under nitrogen with a dew point below - 40° C.

5. Method according to any one of the preceding Claims, **characterised in that** iron- and/or aluminium-containing powder or powder mixtures is/are used as sinterable material.

6. Method according to any one of the preceding Claims, **characterised in that** a sinterable powder mixture is used, comprising 60 to 98.5 wt.%, related to the total amount of the powder mixture, of an Al-based powder of metals and/or the alloys thereof, comprising Al and optionally at least one of the following metals: 0.2 to 30 wt.% Mg, 0.2 to 40 wt.% Si, 0.2 to 15 wt.% Cu, 0.2 to 15 wt.% Zn, 0.2 to 15 wt.% Ti, 0.2 to 10 wt.% Sn, 0.5 to 5 wt.% Mn, 0.2 to 10 wt.% Ni and/or less than 1 wt.% of As, Sb, Co, Be, Pb and/or B, wherein the weight percents are in each case related to the total amount of Al-based powder, as well as 0.8 to 40 wt.%, related to the total amount of the powder mixture, of a metal powder selected from a first group of metals and/or the alloys thereof, consisting of Mo, Wo, Cr, V, Zr and/or Yt.

7. Method according to Claim 6, **characterised in that** the powder mixture also comprises a second group of metals and/or the alloys thereof, consisting of Cu, Sn, Zn, Li and/or Mg.

8. Method according to Claim 7, **characterised in that** the ratio of the amount of the first group of metals and/or the alloys thereof to that of the second group in the powder mixture is in a range from 1:8 to 15:1 parts by weight.

9. Method according to Claim 6, **characterised in that**, in addition to Al, the Al-based powder comprises 0.2 to 15 wt.% Mg, 0.2 to 16 wt.% Si, 0.2 to 10 wt.% Cu and/or 0.2 to 15 wt.% Zn, in each case related to the total amount of the Al-based powder.

10. Method according to Claim 7, **characterised in that** the second group of metals and/or the alloys therefore comprises Cu, Zn and/or Sn.

11. Method according to any one of the preceding Claims, **characterised in that** the powder mixture comprises lubricant in an amount of 0.2 to 5 wt.%, related to the total amount of the powder mixture.

## Revendications

1. Procédé de fabrication de pièces frittées, également de pièces composites, constituées d'une matière frittable,
- dans une première étape, la matière frittable, comprenant 0,6 à 1,8 % en poids, par rapport à la quantité totale du mélange de poudres, d'un liant et/ou d'un lubrifiant, étant introduite dans un premier ensemble de moule ;
- dans une deuxième étape, la matière frittable étant pressée en un compact vert ;
- dans une troisième étape, le compact vert étant post-compacté en totalité dans un deuxième ensemble de moule par pression uniaxiale ; et
- dans une quatrième étape, le compact vert post-compacté étant fritté, le post-compactage réalisé à la troisième étape permettant d'obtenir la masse volumique visée du compact vert qui est d'environ 2 à 40 % supérieure à celle présente avant le post-compactage.

2. Procédé selon la revendication 1, **caractérisé en ce qu'**on décire le compact vert avant la troisième étape.

3. Procédé selon l'une quelconque des revendications 1 ou 2, **caractérisé en ce qu'**à la troisième étape avant l'introduction du compact vert dans le deuxième moule, on pulvérise celui-ci avec un agent de démoulage.

4. Procédé selon l'une quelconque des revendications 1 à 3 précédentes, **caractérisé en ce qu'**on réalise le processus de frittage à une quatrième étape sous azote avec un point de rosée inférieur à -40°C.

5. Procédé selon l'une quelconque des revendications précédentes, **caractérisé en ce qu'**on utilise, comme matière frittable, une poudre ou des mélanges de poudres contenant du fer et/ou de l'aluminium.

6. Procédé selon l'une quelconque des revendications précédentes, **caractérisé en ce qu'**on utilise un mélange de poudres frittables, comprenant 60 à 98,5 % en poids, par rapport à la quantité totale de mélange de poudres, d'une poudre à base d'Al de métaux et/ou leurs alliages, comprenant Al et, le cas échéant, au moins un des métaux suivants : 0,2 à 30 % en poids de Mg, de 0,2 à 40 % en poids de Si, de 0,2 à 15 % en poids de Cu, de 0,2 à 15 % de Zn, de 0,2 à 15 % en poids de Ti, de 0,2 à 10 % de Sn, de 0,5 à 5 % en poids de Mn, de 0,2 à 10 % en poids de Ni et/ou moins de 1 % en poids d'As, de Sb, de Co, de Be, de Pb et/ou de B, les pourcentages en poids se rapportant chacun à la quantité totale de poudre à base d'Al ainsi que 0,8 à 40 % en poids, par rapport à la quantité totale de mélange de poudres, d'une poudre métallique choisie dans un premier groupe de métaux et/ou leurs alliages constitué de Mo, Wo, Cr, V, Zr et/ou Yt.

7. Procédé selon la revendication 6, **caractérisé en ce que** le mélange de poudres renferme en outre un deuxième groupe de métaux et/ou leurs alliages constitué de Cu, de Sn, de Zn, de Li et/ou de Mg.

8. Procédé selon la revendication 7, **caractérisé en ce que** le rapport entre la quantité du premier groupe de métaux et/ou leurs alliages et celle du deuxième groupe dans le mélange de poudres est de l'ordre de 1:8 à 15:1 parties en poids.

9. Procédé selon la revendication 6, **caractérisé en ce que** la poudre à base d'Al contient, outre Al, 0,2 à 15 % en poids de Mg, 0,2 à 16 % en poids de Si, 0,2 à 10 % en poids de Cu et/ou 0,2 à 15 % en poids de Zn, chaque fraction étant rapportée à la quantité totale de poudre à base d'Al.

10. Procédé selon la revendication 7, **caractérisé en ce que** le deuxième groupe de métaux et/ou leurs alliages contient Cu, Zn et/ou Sn.

11. Procédé selon l'une quelconque des revendications précédentes, **caractérisé en ce que** le mélange de poudres renferme des agents lubrifiants dans une quantité de 0,2 à 5 % en poids par rapport à la quantité totale de mélange de poudres.
